# DEMANDE DE BREVET EUROPEEN

(11) **EP 1 130 932 A2**
(43) Date de publication de la demande: **05.09.2001**
(21) Numéro de dépôt: 01400476.6
(22) Date de dépôt: 22.02.2001
(51) Int. Cl.: H04Q 7/22, H04M 3/487, H04M 19/04, G06F 17/60, G08B 5/22

(54) **Procédé de diffusion et de restitution de messages**

(30) Priorité: 22.02.2000 FR 0002209
(71) Demandeur: SAGEM SA, 75116 Paris (FR)
(72) Inventeur: Dupuis, Bernard, Domicilié Cabinet, 95000 Cergy (FR)
(74) Mandataire: Schmit, Christian Norbert Marie

(57) **Abrégé**

L'invention concerne un procédé qui permet à un réseau d'annonceurs (103) de transmettre des messages imposés dans des dispositifs électroniques mobiles (200) connectés à un ou plusieurs réseaux de télécommunication cellulaire, de façon discrète, non encombrante pour l'utilisateur du dispositif visé, et peu pénalisante en terme d'occupation du réseau de communication exploité. En outre, le réseau d'annonceurs émet ses messages via un réseau de téléphonie cellulaire (100), et plus particulièrement via les voies de données de ce réseau. Le message imposé est mémorisé dans une mémoire spécifique (209) du dispositif électronique considéré. Il peut ainsi être restitué plusieurs fois vers les organes de sortie (211, 212, 213) du dispositif électronique en n'ayant été transmis qu'une fois dans le dispositif. Des moyens de gestion de la restitution du message imposé ainsi mémorisé sont proposés.

## Description

L'invention concerne un procédé de diffusion et de restitution d'un message depuis un réseau de télécommunication cellulaire vers un ensemble de dispositifs électroniques de communication du type téléphone mobile ou organiseur électronique mobile. Le type de messages qui sont diffusés selon le procédé de l'invention sont essentiellement des messages à caractère publicitaire, divertissant ou encore informatif, qui sont élaborés par des réseaux d'annonceurs. Les messages concernés ne sont donc en aucun cas destinés à l'établissement, au déroulement ou à la terminaison d'une communication téléphonique via le réseau de communication cellulaire considéré; ils sont accessoires à la mise en place technique de la communication. Ces messages sont appelés messages imposés parce qu'ils n'ont pas été nécessairement choisis par la personne qui les reçoit. Ils s'opposent aux messages dits fonctionnels qui jouent un rôle dans le fonctionnement d'une télécommunication. La nature des messages imposés diffusés est variable : il peut s'agir d'un simple texte, d'une image, d'une animation vidéo, d'un son, d'une mélodie, ou de toute autre forme de messages appropriée à leurs diffusion.

D'une façon générale, le domaine de l'invention est celui de la télécommunication mobile. Elle a pour but d'offrir la possibilité à des réseaux d'annonceurs de diffuser l'objet de leurs annonces vers un public large, qui peut par ailleurs être sélectionné selon certains critères.

Dans l'état de la technique, on connaît différents procédés de diffusion de messages imposés utilisés par les réseaux d'annonceurs qui font appel aux moyens de télécommunication modernes. Ainsi, par exemple, lors qu'on se connecte au réseau Internet, l'accès à certains sites est nécessairement accompagné d'un téléchargement de données qui correspondent à des messages imposés émis par des réseaux d'annonceurs qui trouvent ici un moyen de toucher un public large. Ces messages sont donc téléchargés simultanément aux informations propres au site auquel l'utilisateur souhaite se connecter. Le téléchargement des informations propres au site est en conséquence ralenti par le transfert de ces messages imposés. Pour des raisons de financement des sites, ces messages imposés apparaissent souvent en premier sur l'écran, au mépris de l'attente de l'utilisateur. Par ailleurs, l'accès à un autre site entraîne un nouveau téléchargement de nouveaux messages imposés, qui ralentissent une nouvelle fois les échanges des données. Il se peut même que des messages imposés identiques soient associés à deux sites différents, le passage d'un site à l'autre entraînant malgré tout le téléchargement du message imposé considéré et donc un nouveau ralentissement dans l'accès aux informations recherchées. En effet, ces messages ne sont jamais mémorisés dans le dispositif d'accès au réseau Internet, qu'il s'agisse d'un ordinateur personnel, d'un téléphone portatif pouvant communiquer avec un réseau de radiotéléphonie cellulaire connecté au réseau Internet ou encore d'un organiseur mobile. Chaque affichage du message imposé fait donc suite à une transmission de données qui a encombré le réseau de télécommunication. Par ailleurs, l'accès à un site entraîne nécessairement l'apparition d'un message imposé prédéfini qui ne dépend pas de l'identité de l'interlocuteur.

Dans l'état de la technique, on connaît également des réseaux d'annonceurs qui utilisent un réseau de radiotéléphonie cellulaire pour envoyer, à des intervalles de temps réguliers, un message imposé prédéfini via les voies de transmission de la parole. Ainsi, par exemple, le message imposé en question concerné est diffusé et restitué via un haut-parleur ou un écran du dispositif électronique de communication à des intervalles de temps réguliers. Mais, là encore, le message ainsi restitué provient directement du réseau de communication distant, et en aucun cas du dispositif électronique utilisé. En conséquence, la diffusion de ces messages est relativement encombrante pour un utilisateur du dispositif électronique sur lequel ils sont restitués car elle perturbe la communication établie. Elle est également pénalisante en terme de diffusion sur le réseau de communication exploité, car le message imposé doit être émis de nouveau pour chaque nouvelle restitution dans le dispositif électronique considéré. Par ailleurs, la gestion de l'envoi et de la restitution de tels messages est délicate.

Le procédé selon l'invention permet de résoudre l'ensemble des problèmes qui viennent d'être exposés. Le procédé selon l'invention permet à un réseau d'annonceurs de messages imposés de transmettre des messages dans des dispositifs électroniques mobiles connectés à un ou plusieurs réseaux de télécommunication cellulaire, à l'insu de l'utilisateur du dispositif électronique, c'est à dire de façon discrète, non encombrante pour l'utilisateur du dispositif visé, et peu pénalisante en terme d'occupation du réseau de communication exploité. En outre, le réseau d'annonceurs émet ses messages via un réseau de téléphonie cellulaire, et plus particulièrement via les voies de données de ce réseau. Ainsi, dans le cas particulier d'un téléphone mobile, le message peut être téléchargé dès que le téléphone est repéré par une station de base, c'est à dire dès qu'il est connecté au réseau de télécommunication, sans pour autant être dans un mode de fonctionnement mais éventuellement en étant dans un mode dit de veille. Selon l'invention, le message imposé ainsi transmis est mémorisé dans une mémoire spécifique du dispositif électronique considéré. Le message imposé peut ainsi être restitué plusieurs fois vers les organes de sortie du dispositif électronique en n'ayant été transmis qu'une fois dans le dispositif. Des moyens de gestion de la restitution du message imposé ainsi mémorisé sont proposés dans une mise en oeuvre du procédé selon l'invention. Ces moyens de restitution peuvent être accompagnés de moyens d'acquittement de réception et/ou de moyens d'acquittement de restitution du message sur un des organes de sortie du dispositif électronique considéré. Par ailleurs, le réseau d'annonceurs de messages imposés peut, par consultation d'une base de données d'un opérateur de radiotéléphonie cellulaire, déterminer préalablement un public particulier qui est susceptible d'être intéressé par ses messages, et ainsi choisir de diffuser lesdits messages uniquement dans les dispositifs électroniques des utilisateurs sélectionnés.

L'invention concerne donc un Procédé de diffusion et de restitution d'un message dans des dispositifs électroniques mobiles de communication, ledit message étant imposé, caractérisé en ce qu'il comprend les étapes consistant à :
- élaborer le message imposé;
- introduire le message imposé sur un réseau de communication approprié, du type réseau de radiotéléphonie cellulaire;
- transmettre au dispositif électronique mobile de communication d'un utilisateur, via le réseau de communication approprié, le message imposé à l'insu d'un utilisateur dudit dispositif;
- mémoriser le message imposé dans une mémoire spécifique du dispositif électronique;
- restituer sur des organes de sortie du type haut-parleur et/ou écran le message imposé contenu dans la mémoire spécifique du dispositif à des instants ultérieurs à la transmission dudit message, et suite à certains événements détectés sur le dispositif électronique mobile, définis par un ensemble de paramètres contenus dans le message et/ou dans le dispositif électronique de communication mobile.

En outre, la transmission des messages s'effectue par des voies de données du réseau de communication. Ces voies de données sont par exemple les voies de service bidirectionnel de messages courts, dites voies SMS (Short Message Service dans la littérature anglaise), ou les voies dites USSD (Unstructured Supplementary Service Data dans la littérature anglaise) qui permettent de transporter des données par un réseau pour offrir des services supplémentaires non structurés, ou encore les voies de transmission de données en mode commuté ou par paquets.

Dans un mode de mise en oeuvre préféré de l'invention, le réseau de communication approprié peut échanger des données avec le réseau Internet. Différents modes de restitution des messages via les organes de sortie du dispositif électronique considéré sont proposés.

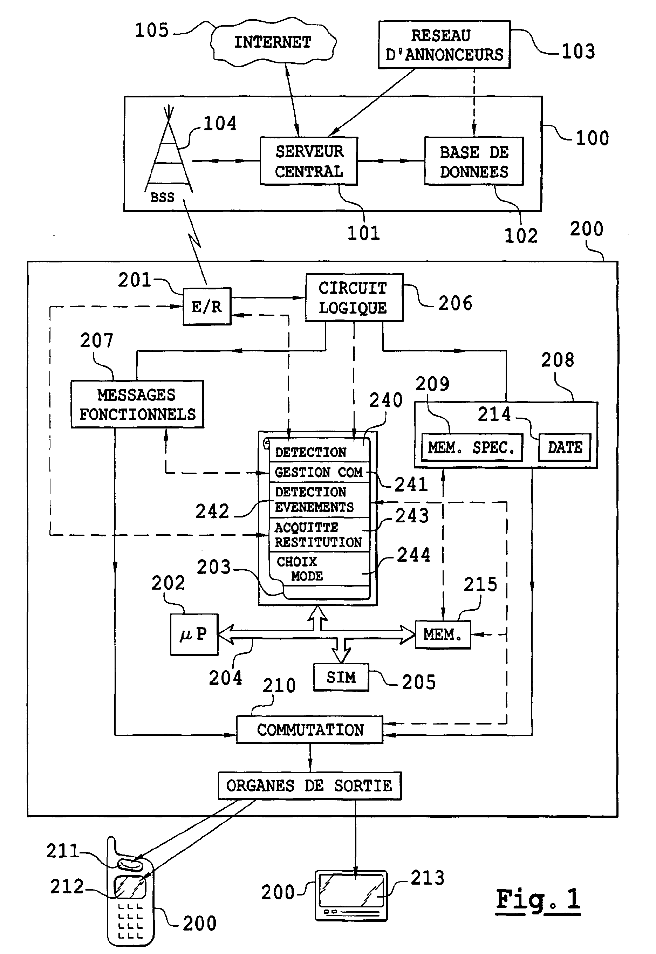

L'invention sera mieux comprise à la lecture de la description qui suit et à l'examen de la figure qui l'accompagne. Celle-ci n'est présentée qu'à titre indicatif et nullement limitatif de l'invention. La figure 1 est une représentation simplifiée d'un système de communication permettant de mettre en place le procédé selon l'invention.

Sur cette figure, un réseau de radiotéléphonie cellulaire 100 géré par un opérateur particulier sur un territoire déterminé est représenté. Ce réseau est appelé un PLMN ( Public Land Mobil Network dans la littérature anglaise). Il peut être vu comme un système de communication mobile qui assure un accès radio au réseau général, le RTCP ( réseau téléphonique commuté public ). Un PLMN organise la répartition des équipements spécifiques qui permettent d'assurer le besoin d'itinérance- l'usager d'un réseau de radiotéléphonie qui se déplace en différents points du territoire couvert doit pouvoir appeler et être appelé- et la notion de transfert intercellulaire- la continuation du service alors que l'utilisateur se déplace doit être assurée. Dans le PLMN 100, on trouve notamment un serveur central 101 qui gère un ensemble de bases de données dédiées au fonctionnement du réseau. Parmi ces bases de données, une base de données d'abonnés 102 mémorise l'ensemble des abonnés au réseau, ainsi qu'éventuellement quelques caractéristiques de ces abonnés. Une entité 103 correspondant à un réseau d'annonceurs peut, avec l'accord de l'opérateur du PLMN 100, élaborer des messages imposés et les transférer vers le serveur central 101 en vue d'une diffusion. Par ailleurs, avec l'accord de l'opérateur auquel appartient le PLMN 100, le réseau d'annonceurs peut avoir accès à la base de données 102.

Une connexion au réseau Internet 105 est également envisagée depuis le PLMN 100. La communication entre le PLMN 100 et un dispositif électronique mobile de communication 200 est assurée par un sous-système radio 104 appelé BSS (Base Station Subsystem dans la littérature anglaise ), composé d'un contrôleur de station de base (BSC) et d'une station de base (BTS). Le contrôleur de station de base commande une ou plusieurs BTS et gère la ressource radio, notamment en effectuant une allocation de canal pour chaque appel et en gérant les décisions relatives aux décisions de transfert intercellulaire. Le BTS est un équipement composé des émetteurs/récepteurs radio. Il constitue l'interface entre les dispositifs électroniques de communication mobiles et le BSC.

Le dispositif électronique 200 sera décrit dans le cas où il correspond à une station mobile du type téléphone mobile. L'invention peut cependant s'appliquer à d'autres dispositifs qui peuvent communiquer avec le PLMN 100, comme par exemple des organiseurs mobiles. Les organiseurs mobiles peuvent s'apparenter à des terminaux de communication dédiés notamment à la consultation et à l'envoi de messages internet; une de leurs caractéristiques est un écran 213 qui est de taille adaptée à la réception de longs textes ou d'images.

La station mobile 200 comprend une unité d'émission/ réception 201 qui permet notamment recevoir des signaux émis depuis la BSS 104. Un microprocesseur 202 du terminal mobile 200 est connecté à une mémoire de programmes 203 au moyen d'un bus bidirectionnel de communication 204. La mémoire de programmes comporte plusieurs applications dédiées à la mise en oeuvre du procédé selon l'invention qui peuvent être remplacées par des circuits électroniques spécialisés. Le microprocesseur gère l'ensemble des opérations d'émission, de réception, de codage, de décodage et tous les autres services qui sont proposés dans le dispositif électronique considéré. Des informations d'adresse, de données ou de commande sont véhiculées entre le microprocesseur et les différents éléments électroniques du terminal mobile via le bus de communication bidirectionnel de communication 204. Par soucis de simplification de la figure, toutes les connexions du bus 204 ne sont pas représentées. Elles sont remplacées sur la figure par des liaisons indiquant les principaux transferts d'information intervenant lors de la mise en oeuvre du procédé selon l'invention dans le terminal mobile 200. Le microprocesseur peut notamment échanger des informations avec une carte SIM 205. Une carte SIM ( Suscriber Identity Module dans la littérature anglaise ) est une carte qui s'insère dans un terminal mobile et qui contient un ensemble d'informations relatives a l'abonnement . De préférence, la carte SIM considérée dans le terminal mobile 200 est une carte SIM pro-active capable d'émettre des instructions de commande vers le terminal.

L'unité d'émission/ réception 201 est connectée à un circuit logique 206 dont la fonction essentielle est d'orienter les messages arrivant vers une unité de traitements 207 des messages fonctionnels ou vers une unité de traitements 208 des message dits imposés. L'unité de traitements 208 comporte en outre une mémoire 209 pour mémoriser des messages imposés. Les deux unités de traitements 207 et 208 sont connectées à un dispositif de commutation 210 qui permet de sélectionner quel type de messages doit être envoyé vers des organes de restitution de messages du dispositif électronique considéré. Ces organes de restitution, ou organes de sortie, peuvent être un haut-parleur 211, un écran 212 du terminal mobile, ou l'écran 213 de l'organiseur mobile. Lorsque le message imposé restitué est un texte, il peut par exemple apparaître de façon défilante dans une zone réservée de l'écran.

Un exemple de mise en oeuvre du procédé selon l'invention est à présent présenté en détails. La première étape du procédé de diffusion d'un message selon l'invention consiste en élaboration du message. Cette opération est effectuée par le réseau d'annonceurs 103 qui, selon un accord passé avec l'opérateur régissant le PLMN 100, peut choisir de diffuser le message vers une cible qui peut être soit l'ensemble des abonnés à l'opérateur, soit un certain nombre d'abonnés qui sont sélectionnés en fonction des critères contenus dans la base de données 102. Le message à transmettre est codé sous forme binaire et mémorisé dans le serveur central 101. La diffusion vers l'ensemble des stations mobiles cibles est effectuée par la BSS 104. Les messages imposés ainsi diffusés sont reçus par l'unité d'émission/ réception 201 de la station mobile 200.

Une application de détection 240 de la mémoire de programmes 203 permet au circuit logique 206 d'envoyer les messages reçus soit vers l'unité de traitements 208 lorsqu'il s'agit d'un message imposé, soit vers l'unité de traitements 207 lorsqu'il s'agit d'un message fonctionnel. L'application de détection 240 analyse à cet effet un en-tête du message reçu. Cet en-tête contient notamment des informations qui permettent de déterminer s'il s'agit d'un message fonctionnel ou d'un message imposé. L'application de détection 240 a également pour fonction de mémoriser l'heure et la date de réception d'un message imposé. Ces informations sont mémorisées dans une mémoire 214 de l'unité de traitements 208 et peuvent être exploités notamment dans l'étape de restitution du message . Les messages imposés sont pour leur part mémorisés dans la mémoire spécifique 209.

La mémoire spécifique 209 peut contenir éventuellement plusieurs messages imposés. Dans un autre mode de réalisation, la mémoire spécifique ne peut contenir qu'un unique message imposé. Dans ce dernier cas de figure, lorsqu'un nouveau message imposé est reçu par la station mobile 200, il peut soit se substituer automatiquement à l'ancien message imposé contenu dans la mémoire spécifique 209, soit ne le remplacer que si l'ancien message imposé a été transmis vers les organes de restitution du dispositif 200 un nombre de fois et pendant une durée préalablement définie.

Une autre fonction de l'application de détection 240 est de retourner un message d'acquittement de réception vers le PLMN 100 par les voies de données du réseau de communication. Ce message d'acquittement de réception peut éventuellement contenir une information indiquant si le nouveau message imposé a pu être mémorisé dans la mémoire spécifique 209, ou s'il n'a pas pu être mémorisé en raison de la présence d'un ancien message imposé qui n'aurait pas été restitué dans les conditions qui avaient été prévues pour lui. Cependant, certains messages imposés peuvent avoir un caractère prioritaire et remplacer le précédent message, ce dernier étant alors soit effacé, soit remis en place pour achever son cycle de restitution après que le message imposé prioritaire achève le sien . Une hiérarchie des messages imposés contenus dans la mémoire spécifique 209 peut ainsi être mise en place dans la cas ou la mémoire spécifique 209 peut contenir plusieurs messages imposés. Cette hiérarchie est établie par l'analyse d'informations qui peuvent être contenues dans l'en-tête de chaque message imposé arrivant dans le terminal mobile 200.

Une application de gestion des communications 241 de la mémoire de programmes 203 gère le traitement habituel des messages fonctionnels dans l'unité de traitement 207.

Une application de détection d'événements 242 de la mémoire de programmes 203 permet de déclencher la restitution d'un message imposé contenu dans la mémoire spécifique 209 à certains instants ou selon certaines actions exercées sur le terminal mobile 200. Les événements qui peuvent être détectés, et qui font l'objet de restitutions événementielles, sont par exemple :
- la réception d'un appel téléphonique. Cet événement peut par exemple entraîner la restitution du message imposé sur le dispositif de restitution du dispositif électronique considéré, par exemple sous la forme d'un message, d'un dessin fixe ou animé sur l'écran 212, ou sous la forme d'une mélodie via le haut-parleur 211 ; la mélodie correspondant au message imposé peut ainsi indiquer l'arrivée d'un appel. Ainsi, à chaque nouvel appel et/ou pour un nombre d'appels prédéterminé, le téléphone mobile sonnera différemment, selon une sonnerie émise par le réseau d'annonceurs. L'intérêt d'effectuer une restitution du message imposé sur l'écran 212 suite à la réception d'un appel est qu'il est quasiment assuré que l'utilisateur va regarder son terminal mobile dans les secondes qui vont suivre la réception de l'appel.
- un téléchargement de données depuis le réseau Internet. Dans ce cas, pendant toute la durée ou pendant une partie de la durée du téléchargement, le message imposé peut être restitué sur l'écran 212 ou via le haut-parleur 211 pendant le temps d'attente de l'utilisateur. La restitution du message imposé pendant le téléchargement ne ralentit pas le téléchargement: en effet, le message imposé qui est restitué est déjà contenu dans le dispositif électronique de communication 200. Sa restitution n'encombre donc pas le réseau de communication exploité.
- la pression d'une touche particulière, par exemple une touche du téléphone qui permet de passer en mode mains libres. Dans ce cas, pendant que le terminal mobile de communication est utilisé en mode mains libres, le message imposé de la mémoire spécifique 209 peut être restitué pendant une partie ou pendant toute la communication sur l'écran 212. Là encore, la restitution du message suite à cet événement est judicieuse, car il y a de fortes chances pour que l'utilisateur regarde son terminal mobile. L'événement détecté peut également correspondre à la pression d'une autre touche que celle qui permet de passer en mode mains libres, cette touche pouvant être une touche quelconque habituellement présente sur les claviers des terminaux mobiles.

Les messages imposés peuvent également être restitués à des intervalles de temps réguliers prédéterminés et/ou pendant une durée limitée prédéterminée. La limitation du temps de restitution peut aussi bien s'appliquer au temps que dure une restitution qu'à la durée pendant laquelle le message imposé est autorisé à rester dans la mémoire spécifique 209, éventuellement indépendamment du caractère prioritaire du message imposé considéré. Au-delà de cette durée prédéfinie de conservation en mémoire, la mémoire spécifique est automatiquement effacée. Ces restitutions dites temporelles- par opposition aux restitutions événementielles qui ont été présentées-utilisent l'application de détection d'événement 242, qui se sert des informations contenues dans la mémoire 214 relatives à la date et à l'heure d'arrivée du message dans le terminal mobile 200. Les paramètres relatifs au mode de restitution des messages imposés - à savoir la durée d'une restitution, la durée de conservation en mémoire, la fréquence des restitutions, le nombre de réitération maximal de restitution d'un même message, l'événement entraînant la restitution, la détermination de l'organe de sortie sur lequel est restitué le message...- sont par exemple mémorisés dans une mémoire 215 du terminal mobile 200. Ces informations peuvent éventuellement être introduites ou mises à jour par la carte SIM 205 pro-active, ou par des données contenues dans l'en-tête du message binaire codant le message imposé. Les paramètres relatifs au mode de restitution sont ainsi des informations paramétrables et modifiables. Le caractère prioritaire du message imposé est une information qui est de préférence contenue dans l'en-tête du message binaire codant le message imposé.

Une application d'acquittement de restitution 243 permet de retourner automatiquement une information vers le réseau 100 à chaque restitution du message imposé de la mémoire 209. Cette information se présente sous la forme d'un message d'acquittement de restitution transmis par les voies de données du réseau de communication. Le réseau d'annonceurs du message considéré peut ainsi avoir une appréciation quant à la fréquence de restitution de ses messages. Une information d'identification de l'utilisateur et/ou du dispositif électronique mobile qui acquitte la restitution du message imposé peut également être renvoyée. L'information d'acquittement est transmise depuis le terminal mobile 200 vers le réseau 100 via les canaux de données du réseau de radiotéléphonie cellulaire qui avaient été utilisés pour la transmission du message imposé.

Une application 244 de choix du mode permet à l'utilisateur d'autoriser la mise en oeuvre du procédé selon l'invention. Dans le cas où il accepte les opérations de transmission de messages imposés vers son terminal mobile et leur restitution via ses organes de sortie, il peut par exemple bénéficier d'une subvention de ses communications par le réseau d'annonceurs 103, les modalités de cette subvention pouvant adopter une multitude de formes. L'application 244 de choix du mode permet de mettre en oeuvre une étape préliminaire consistant à proposer à l'utilisateur un mode de subvention de communication mis en oeuvre simultanément au procédé selon l'invention.

Le procédé selon l'invention peut également être mis en oeuvre dans le contexte où le réseau d'annonceurs a été sélectionné par l'utilisateur du dispositif électronique de communication. Les messages imposés peuvent dans ce cas être des informations, par exemple des résultats sportifs ou des cotations boursières récentes. Dans ce contexte, c'est l'utilisateur qui est susceptible de payer un abonnement au réseau d'annonceurs concerné. Les étapes de transmission, de mémorisation et de restitution peuvent être mises en oeuvre comme précédemment.

## Revendications

1. Procédé de diffusion et de restitution d'un message dans des dispositifs électroniques mobiles de communication (200), ledit message étant imposé, **caractérisé en ce qu**'il comprend les étapes consistant à :
- élaborer le message imposé;
- introduire le message imposé sur un réseau de communication approprié, du type réseau de radiotéléphonie cellulaire;
- transmettre au dispositif électronique mobile de communication d'un utilisateur, via le réseau de communication approprié (100), le message imposé à l'insu d'un utilisateur dudit dispositif;
- mémoriser le message imposé dans une mémoire spécifique (209) du dispositif électronique (200);
- restituer sur des organes de sortie du type haut-parleur (211) et/ou écran (212, 213) le message imposé contenu dans la mémoire spécifique (209) du dispositif à des instants ultérieurs à la transmission dudit message, et suite à certains événements détectés sur le dispositif électronique mobile, définis par un ensemble de paramètres contenus dans le message et/ou dans le dispositif électronique de communication mobile.

2. Procédé de diffusion et de restitution d'un message selon la revendication 1 **caractérisé en ce que** les paramètres définissant les instants et les événements déterminant la restitution d'un message imposé peuvent être mises à jour.

3. Procédé de diffusion et de restitution d'un message selon l'une des revendications précédentes **caractérisé en ce que** la transmission des messages s'effectue par des voies de données du réseau de communication.

4. Procédé de diffusion et de restitution d'un message selon l'une des revendications précédentes **caractérisé en ce que** le réseau de communication approprié peut échanger des données avec le réseau Internet.

5. Procédé de diffusion et de restitution d'un message selon l'une des revendications précédentes **caractérisé en ce que** l'étape de restitution du message imposé est effectuée pendant que le dispositif électronique mobile de communication est utilisé en mode mains libres.

6. Procédé de diffusion et de restitution d'un message selon la revendication 4 **caractérisé en ce que** l'étape de restitution du message imposé est effectuée pendant un téléchargement de données depuis le réseau Internet.

7. Procédé de diffusion et de restitution d'un message selon l'une des revendications précédentes **caractérisé en ce que** l'étape de restitution du message imposé consiste à afficher ledit message dans une zone réservée de l'écran de façon défilante.

8. Procédé de diffusion et de restitution d'un message selon l'une des revendications précédentes **caractérisé en ce que** l'étape de restitution du message imposé est effectuée sous forme d'une mélodie à chaque appel arrivant dans le dispositif électronique mobile de communication.

9. Procédé de diffusion et de restitution d'un message selon l'une des revendications précédentes **caractérisé en ce que** l'étape de mémorisation d'un message imposé a pour effet de substituer un ancien message imposé par un nouveau message imposé.

10. Procédé de diffusion et de restitution d'un message selon l'une des revendications précédentes **caractérisé en ce que** la mémoire spécifique (209) est automatiquement effacée au bout d'une durée prédéfinie par les paramètres contenus dans le message imposé mémorisé et/ou dans le dispositif électronique de communication mobile.

11. Procédé de diffusion et de restitution d'un message selon l'une des revendications précédentes **caractérisé en ce que** l'étape de restitution du message imposé est limitée en durée.

12. Procédé de diffusion et de restitution d'un message selon l'une des revendications précédentes **caractérisé en ce que** l'étape de restitution d'un message mémorisé est réitérée un certain nombre de fois.

13. Procédé de diffusion et de restitution d'un message selon l'une des revendications précédentes **caractérisé en ce qu**'il comporte l'étape supplémentaire consistant à acquitter, au moyen d'un message d'acquittement de réception transmis par le dispositif électronique mobile de communication, chaque mémorisation d'un message imposé dans la mémoire spécifique (209), le message d'acquittement de réception étant transmis par des voies de données du réseau de communication (100).

14. Procédé de diffusion et de restitution d'un message selon l'une des revendications précédentes **caractérisé en ce qu**'il comporte l'étape supplémentaire consistant à acquitter, au moyen d'un message d'acquittement de restitution transmis par le dispositif électronique mobile de communication, chaque restitution du message imposé contenu dans la mémoire spécifique sur les organes de sortie (211 ; 212 ; 213) du dispositif électronique (200), le message d'acquittement de restitution étant transmis par des voies de données du réseau de communication (100).

15. Procédé de diffusion et de restitution d'un message selon la revendication 14 **caractérisé en ce que** le message d'acquittement de restitution contient une information d'identification de l'utilisateur et/ou du dispositif électronique mobile.
